# EUROPEAN PATENT APPLICATION

(11) **EP 4 628 416 A1**
(43) Date of publication of application: **08.10.2025**
(21) Application number: 25165892.8
(22) Date of filing: 25.03.2025
(51) Int. Cl.: B65D 5/20, B65D 81/05, B65D 81/127

(54) **PACKING MEMBER AND PACKING MATERIAL THEREWITH**

(30) Priority: 04.04.2024 JP 2024060907
(71) Applicant: Kyocera Document Solutions Inc., Osaka-shi, Osaka 540-8585 (JP)
(72) Inventor: Funaki, Keiichi, Osaka, 540-8585 (JP); Itano, Atsushi, Osaka, 540-8585 (JP)
(74) Representative: BRP Renaud & Partner mbB Rechtsanwälte Patentanwälte Steuerberater

(57) **Abstract**

A packing member (1) includes a body portion (10) and a shock absorbing member (17, 18, 19). The body portion (10) includes a bottom face portion (11) that is rectangular in shape and on which a packed article (4) is placed, and a side face portion (12a to 12c) that is provided continuously with the bottom face portion (11) via folding lines along its three sides. The body portion (10) is assembled by folding a piece of sheet. The shock absorbing member (17, 18, 19) is disposed along one side of the body portion (10) along which the side face portion (12a to 12c) is not provided continuously with it. The shock absorbing member (17, 18, 19) has a holding structure that keeps the side face portion (12a to 12c) upright relative to the bottom face portion (11).

## Description

### BACKGROUND

The present disclosure relates to a packing member for packing and also protecting a product.

Conventionally, some electronic devices and the like have a mechanically weak part (fragile part), such as a movable part, protruding forward or having a level difference. In such cases, common packing methods may be ineffective in protecting the fragile part from breakage or failure caused by vibration or the like during transportation.

The movable part can be enclosed in a spacer or the level difference can be filled with a spacer as a way of protection. This, however, increases the number of members and complicates the packing or unpacking processes. In addition, after unpacking, the protection member used only during transportation becomes useless and thus has to be disposed of. In view of decreasing the environmental load, it is preferable to reduce the number of members as far as possible.

### SUMMARY

An object of the present disclosure is to provide a packing member and a packing material including the same that can protect a packed article with a fragile part in one direction while allowing easy packing.

According to one aspect of the present disclosure, a packing member includes a body portion and a shock absorbing member. The body portion includes a bottom face portion that is rectangular in shape and on which a packed article is placed, and a side face portion that is provided continuously with the bottom face portion via folding lines along its three sides. The body portion is assembled by folding a piece of sheet. The shock absorbing member is disposed along one side of the body portion along which the side face portion is not provided continuously with it. The shock absorbing member has a holding structure that keeps the side face portion upright relative to the bottom face portion.

### BRIEF DESCRIPTION OF THE DRAWINGS

Fig. 1 is a perspective view of a packing material 100 including a packing member 1 according to an embodiment of the present disclosure.
Fig. 2 is a perspective view of an example of a product 4 to be packed with the packing member 1 according to the embodiment.
Fig. 3 is a plan view of the product 4 placed on a bottom face portion 11 of a body portion 10 of the packing member 1 according to the embodiment.
Fig. 4 is a perspective view of the state where, as compared with the state shown in Fig. 3, first to third shock absorbing members 17 to 19 are placed around sheet discharging trays 42a and 42b of the product 4.
Fig. 5 is a perspective view of the product 4 and the first to third shock absorbing members 17 to 19 in Fig. 4.
Fig. 6 is a perspective view of the state where, as compared with the state shown in Fig. 5, the second shock absorbing member 18 is removed.

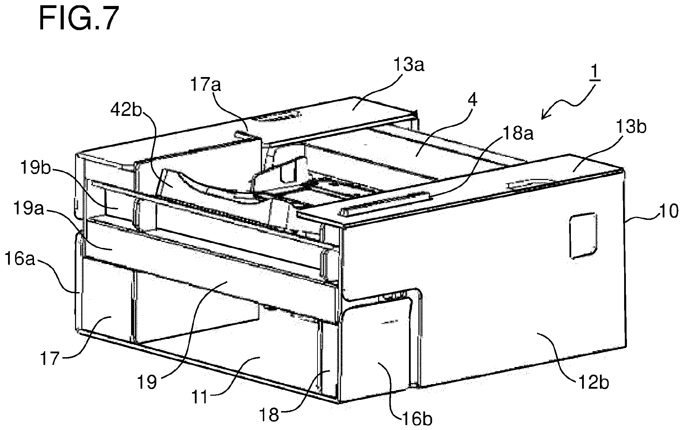

Fig. 7 is a perspective view of the product 4 packed in the packing member 1.

### DETAILED DESCRIPTION

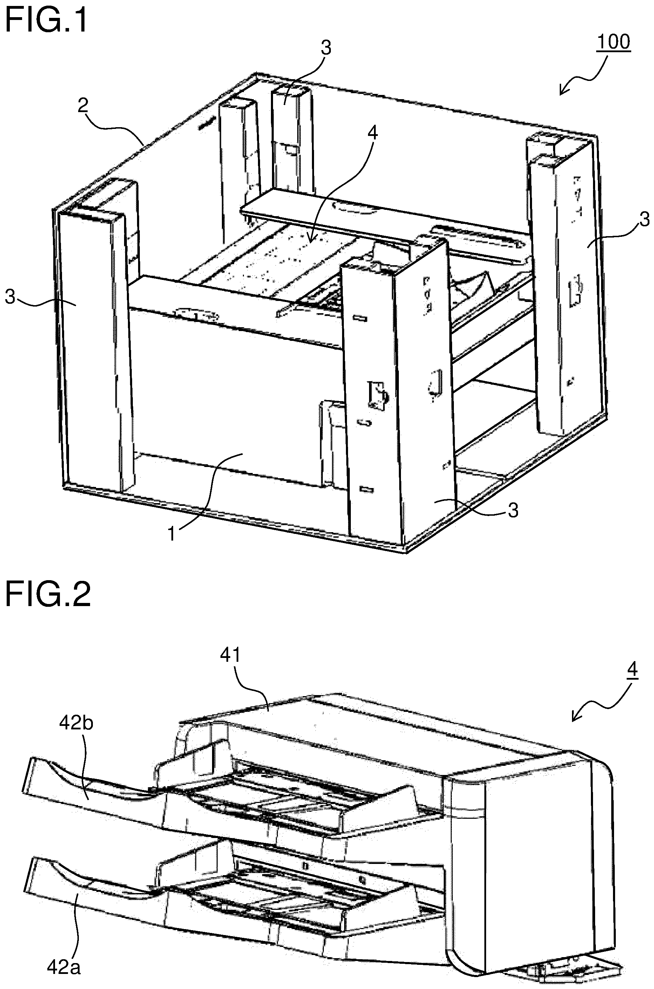

Now, an embodiment of the present disclosure will be described with reference to the accompanying drawings. Fig. 1 is a perspective view of a packing material 100 including a packing member 1 according to an embodiment of the present disclosure. Note that, for convenience of description, in Fig. 1, of an outer case 2, a top face portion and two side face portions at the front are omitted. As shown in Fig. 1, the packing material 100 includes the packing member 1, the outer case 2, and a pillar member 3.

The packing member 1 is an inner case (product tray) that packs a product 4 (packed article). The packing member 1 also functions as a protection member that protects the product 4. A configuration of the packing member 1 will be described in detail later.

The outer case 2 is in the shape of a rectangular parallelepiped open at its top face and covers the bottom face, the side faces, and the top face of the packing member 1 that packs the product 4. Note that, while the embodiment uses an outer case 2 of which a bottom face portion, side face portions, and a top face portion are unitarily formed, it is also possible to use an outer case 2 that can separate into an outer case body having a bottom face portion and side face portions and a lid portion as a top face portion.

The pillar member 3 is disposed in a gap between each of the four corners of the outer case 2 and corresponding corner parts of the packing member 1, and protects the product 4 from an external shock. The pillar member 3 also has function to increase strength against pressure in a stack of the packing material 100. The pillar member 3 is formed by folding a cardboard sheet into a predetermined shape.

Fig. 2 is a perspective view of an example of the product 4 to be packed with the packing member 1 according to the embodiment. The embodiment takes, as the product 4, a sheet discharging device. The product 4 has a device body 41 and sheet discharging trays 42a and 42b. The sheet discharging trays 42a and 42b protrude from one side face of the device body 41 (the near left side in Fig. 2) so as to overlap with each other in the top-bottom direction. Tip parts of the sheet discharging trays 42a and 42b are swingable in the top-bottom direction.

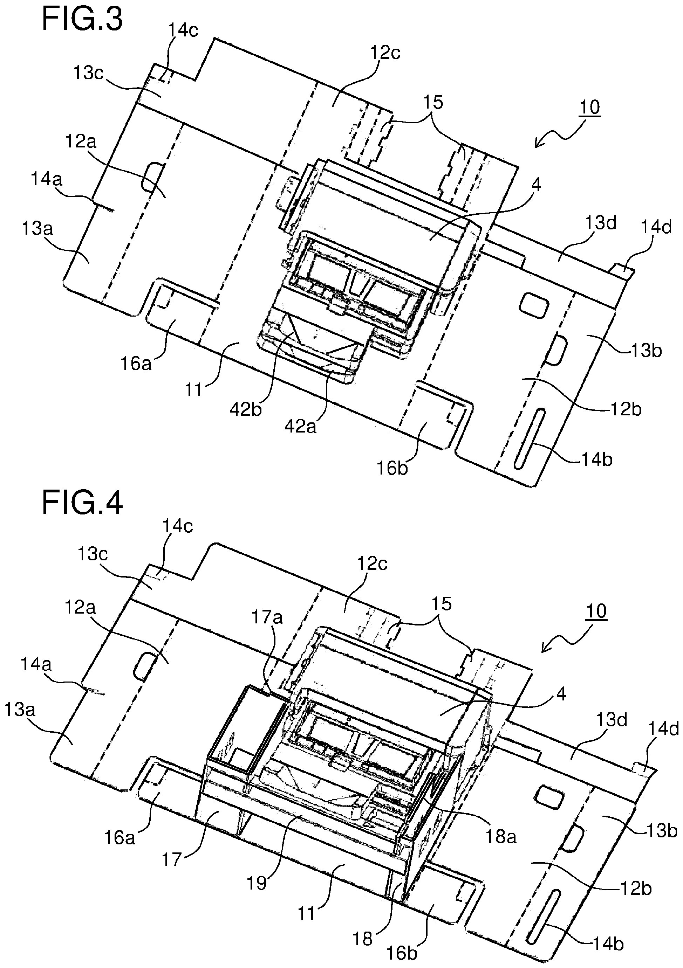

Fig. 3 is a plan view of the product 4 placed on a bottom face portion 11 of a body portion 10 of the packing member 1 according to the embodiment. In Fig. 3, and also in Fig. 4, which will be referred to later, cutting lines are indicated by solid lines and folding lines by broken lines. The packing member 1 has the body portion 10 and a first to a third shock absorbing member 17 to 19 (see Fig. 4).

The body portion 10 has the bottom face portion 11 and a first to a third side face portion 12a to 12c. The bottom face portion 11 is rectangular in shape and the product 4 is placed on it. The first and second side face portions 12a and 12b are provided continuously with the bottom face portion 11 via folding lines along two opposite sides of it. The third side face portion 12c is provided continuously with the bottom face portion 11 via a folding line along another side of it.

Along the sides of the first and second side face portions 12a and 12b opposite from the bottom face portion 11 (i.e., their top sides after assembly), a first and a second flap 13a and 13b are provided continuously with them via folding lines, respectively. The first and second flaps 13a and 13b have a first and a second cut portion 14a and 14b formed in them, respectively.

Along the two sides of the third side face portion 12c orthogonal to the bottom face portion 11 (i.e., the right and left sides after assembly), a third and a fourth flap 13c and 13d are provided continuously with it via folding lines. The third and fourth flaps 13c and 13d have a first and a second insert segment 14c and 14d formed on them, respectively.

In a middle part of the third side face portion 12c, a shock absorbing structure forming portion 15 is formed that has a plurality of folding lines. Folding the shock absorbing structure forming portion 15 along the folding lines into the shape of a rectangular tube forms a shock absorbing structure for protecting the product 4 from a shock.

With the two sides of the bottom face portion 11 with which the first and second side face portions 12a and 12b are provided continuously, shock absorbing member fixing segments 16a and 16b are provided continuously via folding lines.

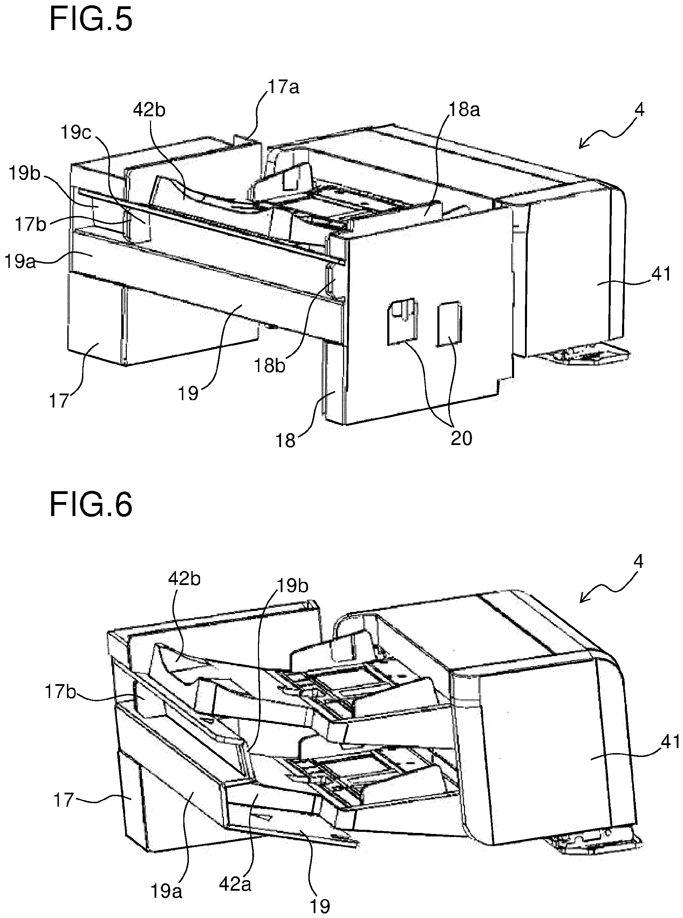

Fig. 4 is a perspective view of the state where, as compared with the state shown in Fig. 3, the first to third shock absorbing members 17 to 19 are placed around the sheet discharging trays 42a and 42b of the product 4. Fig. 5 is a perspective view of the product 4 and the first to third shock absorbing members 17 to 19 in Fig. 4. Fig. 6 is a perspective view of the state where, as compared with the state shown in Fig. 5, the second shock absorbing member 18 is removed.

The first and second shock absorbing members 17 and 18 are each formed by folding a cardboard sheet into the shape of a rectangular tube. The first and second shock absorbing members 17 and 18 are disposed along the sides of the sheet discharging trays 42a and 42b so as to protect the sheet discharging trays 42a and 42b from an external shock. The first and second shock absorbing members 17 and 18 are disposed so as to protrude outward beyond the device body 41 of the product 4 to protect the device body 41 from an external shock.

As shown in Fig. 5, in top end parts of the first and second shock absorbing members 17 and 18, a first and a second engagement portion 17a and 18a are formed, respectively. In side end parts of the first and second shock absorbing members 17 and 18 (end parts in the protruding direction of the sheet discharging trays 42a and 42b), a first and a second projection portion 17b and 18b are formed, respectively. In side face portions of the first and second shock absorbing members 17 and 18 (their faces opposite the first and second side face portions 12a and 12b), insertion holes 20 are formed. Note that, in Fig. 5, the insertion holes 20 in the first shock absorbing member 17 are not illustrated.

As shown in Fig. 6, the third shock absorbing member 19 is formed by folding a cardboard sheet multiple times (in the embodiment, two times) into a U-shape as seen from a side face. The third shock absorbing member 19 has a first and a second bent portion 19a and 19b. The first bent portion 19a is in a convex shape protruding outward of the packing member 1. The second bent portion 19b is formed above the first bent portion 19a, adjacent to it, and is in a convex shape protruding inward of the packing member 1. The second bent portion 19b has a slit 19c formed in it into which the first and second projection portion 17b and 18b are inserted.

Now, the sequence of the assembly of the packing member 1 will be described. First, as shown in Fig. 3, the product 4 is placed on the bottom face portion 11 of the body portion 10. Specifically, the product 4 is placed such that its sheet discharging trays 42a and 42b face the side of the bottom face portion 11 along which the first to third side face portions 12a to 12c are not provided continuously.

Next, as shown in Figs. 4 to 6, the first to third shock absorbing members 17 to 19 are disposed around the sheet discharging trays 42a and 42b. Specifically, along sides of the sheet discharging trays 42a and 42b of the product 4, the first and second shock absorbing members 17 and 18 are disposed. Then, the third shock absorbing member 19 is disposed between the first and second shock absorbing members 17 and 18. As shown in Fig. 6, the first bent portion 19a of the third shock absorbing member 19 covers the tip part of the sheet discharging tray 42a and the second bent portion 19b is inserted into the gap between the sheet discharging trays 42a and 42b.

Then, into the slit 19c in the third shock absorbing member 19, the first projection portion 17b of the first shock absorbing member 17 and the second projection portion 18b of the second shock absorbing member 18 are inserted. The third shock absorbing member 19 is thus fixed to the first and second shock absorbing members 17 and 18 so as to bridge between them.

Next, of the body portion 10, the shock absorbing structure forming portion 15 of the third side face portion 12c is bent along folding lines to form a shock absorbing structure. Then, the first to third side face portions 12a to 12c are raised upright vertically from three sides of the bottom face portion 11. Meanwhile, the third and fourth flaps 13c and 13d provided continuously with the third side face portion 12c are bent inward to overlap with the inner faces in the first and second side face portions 12a and 12b. Then, the first insert segment 14c of the third flap 13c and the second insert segment 14d of the fourth flap 13d are inserted into the insertion holes 20 in the first and second shock absorbing members 17 and 18, respectively. This keeps the third side face portion 12c upright.

Further, the shock absorbing member fixing segments 16a and 16b are bent upright relative to the bottom face portion 11 and are inserted into the insertion holes 20 of the first and second shock absorbing members 17 and 18 so as to be fixed to these. The first and second shock absorbing members 17 and 18 are thus positioned with respect to the bottom face portion 11.

Finally, the first flap 13a provided continuously with the first side face portion 12a and the second flap 13b provided continuously with the second side face portion 12b are bent inward. Then, the first and second cut portions 14a and 14b are engaged with the first engagement portion 17a of the first shock absorbing member 17 and the second engagement portion 18a of the second shock absorbing member 18, respectively. This keeps the first and second side face portions 12a and 12b upright. The first and second engagement portions 17a and 18a and the insertion holes 20 are a holding structure that keeps the first to third side face portions 12a to 12c upright relative to the bottom face portion 11.

The thus assembled packing member 1 is placed in the outer case 2 and, with the pillar members 3 inserted in the gaps between the packing member 1 and the outer case 2, the outer case 2 is closed. In this way, the product 4 is packed in the packing material 100.

With the packing member 1 according to the embodiment, the first to third side face portions 12a to 12c face the product 4 from three directions except the protruding direction of its sheet discharging trays 42a and 42b, and in the protruding direction of the sheet discharging trays 42a and 42b, the first to third shock absorbing members 17 to 19 are disposed. The first and second shock absorbing members 17 and 18 have the first and second engagement portions 17a and 18a and the insertion holes 20 with which they keep the first to third side face portions 12a to 12c upright relative to the bottom face portion 11.

Thus, the sheet discharging trays 42a and 42b, which are susceptible to vibration and a shock in the top-bottom direction, are held by the first and second bent portions 19a and 19b of the third shock absorbing member 19, and this helps prevent breakage of the sheet discharging trays 42a and 42b. In other words, it is possible to effectively protect, from an external shock, the product 4 that has a fragile part (the sheet discharging trays 42a and 42b) that has a multilayer structure in one direction.

The packing member 1 is configured by raising the first to third side face portions 12a to 12c of the body portion 10 from three directions and using, as the side face pointing in the remaining direction, a member separate from the body portion 10 (the first to third shock absorbing members 17 to 19). This allows the product 4 to be placed, with the body portion 10 unfolded, on the bottom face portion 11 from the direction in which the first to third side face portions 12a to 12c are not formed. This eliminates the need for one to stretch one's arms far to place the product 4 on the bottom face portion 11, improving ease of assembly.

Moreover, the first and second shock absorbing members 17 and 18 are disposed so as to protrude outward beyond the device body 41 of the product 4 and the shock absorbing structure forming portion 15 is provided in the third side face portion 12c. This helps effectively protect the product 4 from an external shock from the three directions except the protruding direction of the sheet discharging trays 42a and 42b.

The above embodiment is not meant as any limitation on the present disclosure and thus various modifications can be made without departing from the spirit of the present disclosure. For example, in the above embodiment, the first and second bent portions 19a and 19b are formed by bending the third shock absorbing member 19 two times into a U-shape as seen from a side face. The number of times of bending, however, can be changed to suit application to a product 4 that has a fragile part that has a structure with a single layer or three or more layers.

While, the above embodiment takes, as an example of the product 4 to be packed with the packing member 1, a sheet discharging device, the packing member 1 according to the present disclosure finds application quite equally in, any products 4 other than sheet discharging devices if they have a fragile part in one direction.

While, in the above embodiment, the description is given of the packing material 100 including the packing member 1, the outer case 2, and the pillar member 3, the packing material 100 can include other components. For example, a shock absorbing member can be disposed between the top face of the packing member 1 and the top face portion of the outer case 2.

The present disclosure finds applications in packing members for packing and also protecting a product. Based on the present disclosure, it is possible to provide a packing member and a packing material including the same that help protect a packed article that has a fragile part in one direction while allowing easy packing.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A packing member (1) **characterized by**:
a body portion (10) including
a bottom face portion (11) that is rectangular in shape and on which a packed article (4) is placed, and
a side face portion (12a to 12c) that is provided continuously with the bottom face portion (11) via folding lines along three sides of the bottom face portion (11),
the body portion (10) being assembled by folding a piece of sheet; and
a shock absorbing member (17, 18, 19) disposed along one side of the body portion (10)
along which the side face portion (12a to 12c) is not provided continuously therewith,
the shock absorbing member (17, 18, 19) having a holding structure that keeps the side face portion (12a to 12c) upright relative to the bottom face portion (11).

2. The packing member (1) according to claim 1, **characterized in that** the side face portion (12a to 12c) is configured with:
first and second side face portions (12a, 12b) that are provided continuously with the bottom face portion (11) via folding lines along two opposite sides of the bottom face portion (11); and
a third side face portion (12c) that is provided continuously with the bottom face portion (11) via a folding line along another side of the bottom face portion (11), and
the shock absorbing member (17, 18, 19) includes:
a first shock absorbing member (17) disposed along an inner face of the first side face portion (12a);
a second shock absorbing member (18) disposed along an inner face of the second side face portion (12b); and
a third shock absorbing member (19) fixed to the first and the second shock absorbing members (17, 18) so as to bridge between the first and second shock absorbing members (17, 18).

3. The packing member (1) according to claim 2, **characterized in that** the packed article (4) has a fragile part (42a, 42b) that has a multilayer structure in one
direction among horizontal directions,
the third shock absorbing member (19) has one or more bent portions (19a, 19b) formed in a U-shape as seen from a side face, the bent portions (19a, 19b) being arranged adjacent to each other in a top-bottom direction, and
the bent portions (19a, 19b) are inserted into a gap in the fragile part (42a, 42b).

4. The packing member (1) according to claim 2, **characterized in that**
along sides of the first and the second side face portions (12a, 12b) opposite from the bottom face portion (11), first and second flaps (13a, 13b) are provided continuously with the first and the second side face portions (12a, 12b) via folding lines, and
the holding structure is configured with:
a cut portion (14a, 14b) formed in the first and the second flaps (13a, 13b); and
an engagement portion (17a, 18a) formed in the first and the second shock absorbing members (17, 18), the engagement portion (17a, 18a) being inserted into the cut portion (14a, 14b).

5. The packing member (1) according to claim 2, **characterized in that**
along two sides of the third side face portion (12c) orthogonal to the bottom face portion (11), third and fourth flaps (13c, 13d) are provided continuously with the third side face portion (12c) via folding lines, and
the holding structure is configured with: an insert segment (14c, 14d) formed in the third and the fourth flaps (13c, 13d); and an insertion hole (20) formed in the first and the second shock absorbing members (17, 18), the insert segment (14c, 14d) being inserted into the insertion hole (20).

6. The packing member (1) according to claim 2, **characterized in that**
in the third side face portion (12c), a shock absorbing structure forming portion (15) is formed that has a plurality of folding lines and folding the shock absorbing structure forming portion (15) along the folding lines into a shape of a rectangular tube forms a shock absorbing structure for protecting the packed article (4) from a shock.

7. The packing member (1) according to claim 2, **characterized in that**
with two sides of the body portion (10) with which the first and the second side face portions (12a, 12b) are provided continuously, shock absorbing member fixing segments (16a, 16b) are provided continuously via folding lines, the shock absorbing member fixing segments (16a, 16b) being engaged with the first and the second shock absorbing members (17, 18).

8. A packing material (100) comprising:
the packing member (1) according to claim 1;
an outer case (2) in which the packing member (1) is housed; and
a pillar member (3) disposed in a gap between the packing member (1) and the outer case (2).
